Europäisches Patentamt

European Patent Office

Office européen des brevets

(19)

(11) Veröffentlichungsnummer: **0 090 251**
**B1**

(12) # EUROPÄISCHE PATENTSCHRIFT

(45) Veröffentlichungstag der Patentschrift:
**27.08.86**

(21) Anmeldenummer: **83102505.1**

(22) Anmeldetag: **14.03.83**

(51) Int. Cl.⁴: **F 24 F  13/00,** B 60 H  1/00

(54) **Schieberregler.**

(30) Priorität: **26.03.82  DE 3211319**

(43) Veröffentlichungstag der Anmeldung:
**05.10.83 Patentblatt 83/40**

(45) Bekanntmachung des Hinweises auf die Patenterteilung:
**27.08.86 Patentblatt 86/35**

(84) Benannte Vertragsstaaten:
**AT BE CH DE FR GB IT LI LU NL SE**

(56) Entgegenhaltungen:
**FR - A - 2 220 829**
**FR - A - 2 299 676**

(73) · Patentinhaber: **Siemens Aktiengesellschaft Berlin und München, Wittelsbacherplatz 2, D-8000 München 2 (DE)**

(72) Erfinder: **Hildebrand, Reinhard, Hauptstrasse 11, D-8621 Redwitz (DE)**
Erfinder: **Waldmann, Bernd, Gries 19, D-8621 Redwitz (DE)**

## Beschreibung

Die Erfindung betrifft einen Schieberregler mit einem in einem Schlitz an einem Grundkörper geführten Betätigungshebel für Heizungs- und Klimaanlagen in Kraftfahrzeugen mit einer Lichtquelle im Grundkörper.

Bislang wird das Austreten von Fremdlicht an Betätigungsvorrichtungen für beispielsweise Belüftung und Heizung in Kraftfahrzeugen und Klimaanlagen durch direkte Abdeckung des Leuchtkörpers unterbunden. Der Leuchtkörper ist deshalb bedampft oder mit zusätzlichen Teilen abgedeckt. Der Blick in den Innenraum ist noch frei. Vielfach stört auch ein solches Design.

Aus FR-A 2 299 676 ist eine Symbolsteuerung und -beleuchtung bekannt. Das Sichtbarmachen von angeleuchteten Symbolen erfolgt hier durch Durchleuchten eines bestimmten Bereiches mit einem mit der Scheibe in Verbindung stehenden zentrisch gebogenen Filter, also zwei getrennten Scheiben. Die zwischen der Lichtquelle und der Scheibe dazwischengeschalteten Filter sind semitransparent, gekrümmt und in sich instabil.

Der Erfindung liegt die Aufgabe zugrunde, das Austreten von Fremdlicht in Schieberreglern in Heizungs- und Lüftungsbetätigungselementen in Klimaanlagen von Kraftfahrzeugen zu verhindern. Darüber hinaus soll auch noch eine Verschmutzung, insbesondere Verstaubung, des inneren Aufbaus der Regeleinrichtung, die hinter dem Armaturenbrett angebracht ist, verhindert werden.

Diese Aufgabe wird bei einem Gerät der eingangs genannten Art erfindungsgemäss gelöst durch ein stets über die Länge des Schlitzes reichendes, durch Führungsnuten geführtes Band, das durch den Betätigungshebel, der mittig zum Band angeordnet ist, geradlinig und parallel zum Schlitz verlaufend unter Abdeckung des Schlitzes mitführbar ist. Das Band deckt den Schlitz ab. Man erhält bei verbessertem Design keinen Austritt von Fremdlicht aus dem Innern. Gleichzeitig wird eine Verunreinigung des Innenraumes vermieden.

Das Band kann von aussen gesehen hinter dem Schlitz am Betätigungshebel angebracht sein und freie Enden aufweisen. Die Enden des Bandes können auch am Betätigungshebel angebracht sein.

Die erfindungsgemässen Vorrichtungen eignen sich zum Abdecken von Schlitzen in Schieberreglern für Heizung und Lüftung von Klimaanlagen von Kraftfahrzeugen.

Im folgenden wird die Erfindung anhand von in der Zeichnung dargestellten Ausführungsbeispielen näher erläutert. Es zeigen:

Fig. 1 einen Schieberregler gemäss der Erfindung im Schnitt,
Fig. 2 einen Schnitt mit offenem Band.

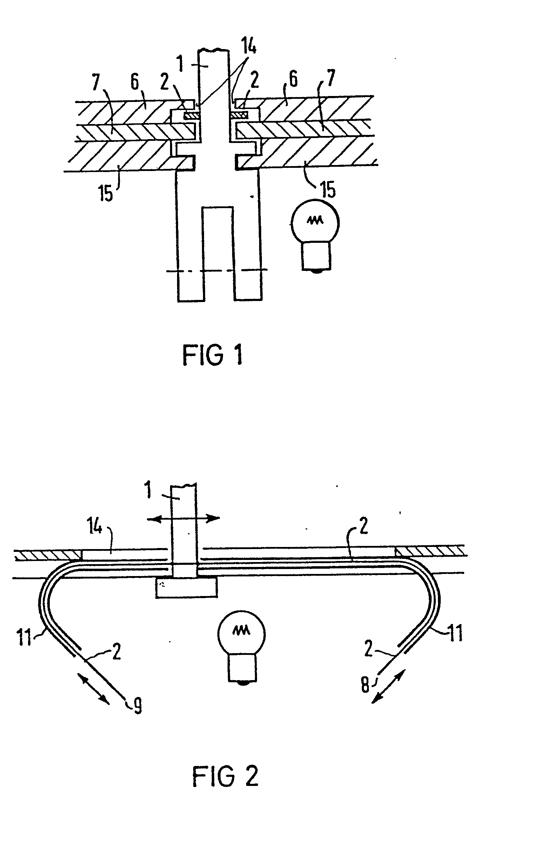

Fig. 1 zeigt im Schnitt einen Schieberregler mit einem Betätigungshebel 1. Ein Band 2 ist am Betätigungshebel 1 montiert und zwischen den beiden Bauteilen 6 und 7 geführt, wobei 6 als Blende fungiert. Das Prisma 7 ist beleuchtet. Am Ende des Schlitzes erfolgt die Führung durch Führungsnuten 11 (Fig. 2). Mit 14 sind die Schlitze bezeichnet, die jeweils zwischen der Blende 6 und dem Hebel 1 entstehen. 15 ist der Grundkörper.

Gemäss Fig. 2 ist ein Band 2 offen am Betätigungshebel 1 montiert. Die Enden 8 und 9 sind frei.

## Patentansprüche

1. Schieberregler mit einem in einem Schlitz an einem Grundkörper (15) geführten Betätigungshebel (1) für Heizungs- und Klimaanlagen in Kraftfahrzeugen mit einer Lichtquelle im Grundkörper (15), gekennzeichnet durch ein stets über die Länge des Schlitzes reichendes, durch Führungsnuten (11) geführtes Band (2), das durch den Betätigungshebel (1), der mittig zum Band (2) angeordnet ist, geradlinig und parallel zum Schlitz verlaufend unter Abdeckung des Schlitzes mitführbar ist.

2. Schieberregler nach Anspruch 1, dadurch gekennzeichnet, dass das Band (2), von aussen gesehen, hinter dem Schlitz am Betätigungshebel (1) angebracht ist und freie Enden (8, 9) aufweist.

## Claims

1. A sliding control knob having an operating lever (1) which is guided in a slot in a basic body (15) for heating and air-conditioning systems in motor vehicles, and having a light source in the basic body (15), characterised by a strip (2) which always extends along the length of the slot and is guided through guide grooves (11), and which, by means of the operating lever (1) which is arranged centrally of the strip (2), can be carried along covering the slot, so as to extend in a straight line and parallel to the slot.

2. A sliding control knob as claimed in Claim 1, characterised in that, viewed from the outside, the strip (2) is fixed to the operating lever (1) behind the slot and has free ends (8, 9).

## Revendications

1. Régulateur à curseur, comprenant un levier de manœuvre (1), guidé dans une fente d'un corps de base (15), pour des installations de chauffage et de conditionnement d'air de véhicules automobiles, avec une source lumineuse dans le corps de base (15), caractérisé par un ruban (2), qui s'étend constamment sur la longueur de la fente, qui est guidé par des gorges de guidage (11) et qui peut être entraîné, en se déplaçant de manière rectiligne et parallèlement à la fente et en la recouvrant, par le levier de manœuvre (1) disposé au milieu par rapport au ruban (2).

2. Régulateur à curseur suivant la revendica-

**0 090 251**

tion 1, caractérisé en ce que le ruban (2) est fixé au levier de manœuvre (1), vu de l'extérieur, derrière la fente et présente des extrémités libres (8, 9).

FIG 1

FIG 2